# EUROPEAN PATENT APPLICATION

(11) **EP 4 373 149 A1**
(43) Date of publication of application: **22.05.2024**
(21) Application number: 22841153.4
(22) Date of filing: 23.06.2022
(51) Int. Cl.: H04W 24/02

(54) **RELAY STATE MANAGEMENT METHOD AND APPARATUS, AND TERMINAL**

(30) Priority: 16.07.2021 CN 202110808529
(71) Applicant: Datang Mobile Communications Equipment Co., Ltd., Beijing 100085 (CN)
(72) Inventor: ZHAO, Yali, Beijing 100085 (CN)
(74) Representative: dompatent von Kreisler Selting Werner - Partnerschaft von Patent- und Rechtsanwälten mbB
(86) International application number: PCT/CN2022/100737
(87) International publication number: WO 2023/284513

(57) **Abstract**

This disclosure provides a relay state management method and apparatus, and a terminal. The method includes: performing, by a first terminal, activation and/or deactivation of a relay function of the first terminal based on a first channel quality or first indication information, wherein the first terminal is a terminal having the relay function, the first channel quality is a channel quality of a sidelink interface between the first terminal and a relay terminal, and the first indication information is transmitted to the first terminal by a network device or the relay terminal.

## Description

### CROSS-REFERENCE TO RELATED APPLICATION

The present application claims priority to a Chinese Patent Application No. 202110808529.6, filed in China on July 16, 2021, disclosure of which is incorporated herein by reference in its entirety.

### TECHNICAL FIELD

The present disclosure relates to the field of communication technologies, and more particularly, to a relay state management method and apparatus, and a terminal.

### BACKGROUND

The traditional wireless communication adopts a cellular network communication manner, that is, transmissions of uplink and downlink data and/or control information are performed between a terminal and a network-side device via a user to network interface (Uu interface).

Direct communication refers to a way of data transmission in which neighboring terminals within a close range can perform data transmission therebetween via a direct communication link (also known as sidelink, or PC5). The radio interface corresponding to a sidelink is called a direct communication interface (also called a sidelink interface, or a PC5 interface).

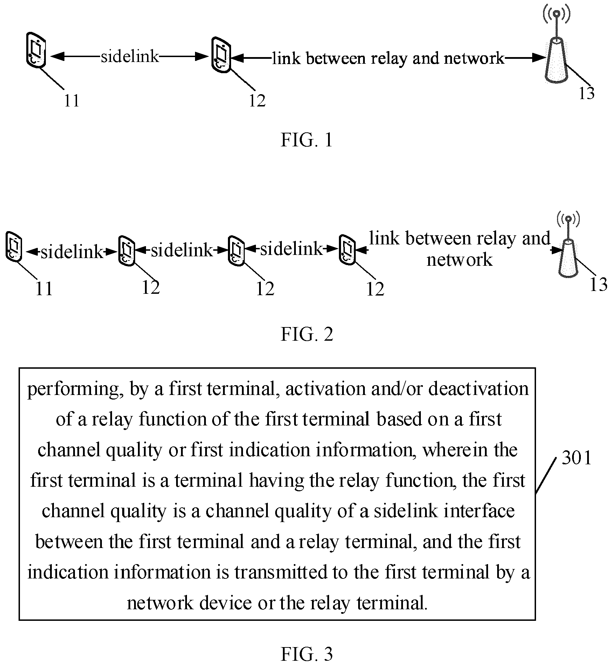

In order to expand network coverage, a solution is to introduce a UE-to-network relay (hereinafter referred to as relay). If the sidelink interface is used between a relay and a remote user equipment (UE), the relay is also called a sidelink relay. The relay itself may be a terminal having a relay function. As shown in FIG. 1, for the UE-to-network relay, the interface between a relay terminal 12 and a network device 13 is the Uu interface, and the interface between the relay terminal 12 and a relayed terminal (which may be referred to as a remote terminal) 11 is the sidelink interface. A link (Uu link) between the relay and the network can be called a backhaul link for the remote terminal.

Generally, one-hop relay is enough, so conventionally only one-hop relay is supported for the sidelink relay, i.e., a remote terminal accesses a relay terminal through the sidelink, and the relay terminal can be directly connected to a network device. Relay activation is performed based on a Uu interface channel quality threshold configured by the network. However, for some special scenarios, if the remote terminal cannot be connected to the network through one relay, then a multi-hop relay may be introduced. Unfortunately, in a multi-hop relay scenario, a relay terminal may be off-line, so the relay terminal cannot be activated based on the Uu interface channel quality threshold configured by the network. Therefore, there is no solution for the relay activation in the multi-hop relay scenario.

### SUMMARY

Embodiments of the present disclosure aim to provide a relay state management method and apparatus, and a terminal, so as to solve a problem that there is no corresponding relay activation solution for a multi-hop sidelink relay in the related art.

In order to solve the above problem, an embodiment of the present disclosure provides a relay state management method. The method includes:
performing, by a first terminal, activation and/or deactivation of a relay function of the first terminal based on a first channel quality or first indication information,
wherein the first terminal is a terminal having the relay function, the first channel quality is a channel quality of a sidelink interface between the first terminal and a relay terminal, and the first indication information is transmitted to the first terminal by a network device or the relay terminal.

The method further includes:
obtaining, by the first terminal, a first channel quality threshold and/or a second channel quality threshold, the second channel quality threshold being higher than the first channel quality threshold; and
performing, by the first terminal, a determination as to activation and/or deactivation of the relay function based on the first channel quality and the obtained first channel quality threshold and/or second channel quality threshold.

The obtaining, by the first terminal, the first channel quality threshold and/or the second channel quality threshold includes:
obtaining, by the first terminal, the first channel quality threshold and/or the second channel quality threshold in a first manner, wherein the first manner includes at least one of:
the first channel quality threshold and/or the second channel quality threshold is pre-configured;
the first channel quality threshold and/or the second channel quality threshold is transmitted by the network device; or
the first channel quality threshold and/or the second channel quality threshold is transmitted by the relay terminal.

In case that the first terminal performs the determination as to the activation and/or deactivation of the relay function based on the first channel quality and the first channel quality threshold, the method further includes:
determining, by the first terminal, that the activation of the relay function is allowed in case that the first channel quality is greater than or equal to the first channel quality threshold; and/or
determining, by the first terminal, that the deactivation of the relay function is allowed in case that the first channel quality is less than or equal to the first channel quality threshold.

In case that the first terminal performs the determination as to the activation and/or deactivation of the relay function based on the first channel quality and the second channel quality threshold, the method further includes:
determining, by the first terminal, that the activation of the relay function is allowed in case that the first channel quality is less than or equal to the second channel quality threshold; and/or
determining, by the first terminal, that the deactivation of the relay function is allowed in case that the first channel quality is greater than or equal to the second channel quality threshold.

In case that the first terminal performs the determination as to the activation and/or deactivation of the relay function based on the first channel quality, the first channel quality threshold, and the second channel quality threshold, the method further includes:
determining, by the first terminal, that the activation of the relay function is allowed in case that the first channel quality is less than or equal to the second channel quality threshold and greater than or equal to the first channel quality threshold; and/or
determining, by the first terminal, that the deactivation of the relay function is allowed in case that the first channel quality is greater than or equal to the second channel quality threshold or less than or equal to the first channel quality threshold.

The method further includes the following.
in case that the first terminal determines that the activation of the relay function is allowed, a specific time of the activation of the relay function depends on the implementation of the first terminal; or
in case that the first terminal determines that the deactivation of the relay function is allowed, a specific time of the deactivation of the relay function depends on the implementation of the first terminal.

In case that the first manner includes that the first channel quality threshold and/or the second channel quality threshold is transmitted by the network device, the obtaining, by the first terminal, the first channel quality threshold and/or the second channel quality threshold in the first manner includes:
obtaining, by the first terminal, the first channel quality threshold and/or the second channel quality threshold through a first broadcast message transmitted by the network device; and/or
obtaining, by the first terminal, the first channel quality threshold and/or the second channel quality threshold through dedicated signaling transmitted by the network device.

In case that the first manner includes that the first channel quality threshold and/or the second channel quality threshold is transmitted by the relay terminal, the obtaining, by the first terminal, the first channel quality threshold and/or the second channel quality threshold in the first manner includes:
obtaining, by the first terminal, the first channel quality threshold and/or the second channel quality threshold through a second broadcast message transmitted by the relay terminal over the sidelink interface.

The second broadcast message includes at least one of:
a relay discovery message;
a broadcast message obtained, by the relay terminal, from the network device and forwarded by the relay terminal over the sidelink interface; or
a broadcast message of the network device obtained, by the relay terminal, from another relay terminal and forwarded by the relay terminal over the sidelink interface.

The method further includes:
in case that the first terminal obtains a plurality of first channel quality thresholds and/or a plurality of second channel quality thresholds, determining, by the first terminal, the first channel quality threshold and/or the second channel quality threshold in a second manner, wherein the second manner includes at least one of:
selecting any one of the plurality of first channel quality thresholds as the first channel quality threshold;
selecting any one of the plurality of second channel quality thresholds as the second channel quality threshold;
selecting a first channel quality threshold and/or a second channel quality threshold transmitted by the relay terminal which the first terminal expects to access as the first channel quality threshold and/or the second channel quality threshold;
selecting a lowest channel quality threshold among the plurality of second channel quality thresholds as the second channel quality threshold;
selecting a highest channel quality threshold among the plurality of second channel quality thresholds as the second channel quality threshold;
selecting a lowest channel quality threshold among the plurality of first channel quality thresholds as the first channel quality threshold;
selecting a highest channel quality threshold among the plurality of first channel quality thresholds as the first channel quality threshold; or
selecting a first channel quality threshold and/or a second channel quality threshold with a highest priority in accordance with an order of priority as the first channel quality threshold and/or the second channel quality threshold.

A descending order of priority includes:
a first channel quality threshold and/or a second channel quality threshold received by the first terminal from the network device;
a first channel quality threshold and/or a second channel quality threshold received by the first terminal from the relay terminal; and
a pre-configured first channel quality threshold and/or a pre-configured second channel quality threshold.

The performing, by the first terminal, the activation and/or deactivation of the relay function based on the first indication information includes:
in case that the first indication information indicates that the relay function is to be activated, determining, by the first terminal, that the activation of the relay function is allowed and performing, by the first terminal, the activation of the relay function; and/or
in case that the first indication information indicates that the relay function is to be deactivated, determining, by the first terminal, that the deactivation of the relay function is allowed and performing, by the first terminal, the deactivation of the relay function.

In case that the first terminal performs the activation and/or deactivation of the relay function based on the first indication information, the method further includes:
receiving, by the first terminal, the first indication information transmitted by the network device or the relay terminal;
wherein a radio resource control (RRC) connection exists between the first terminal and the network device, or an end-to-end RRC connection exists between the first terminal and the network device through the relay terminal.

The first indication information is carried by RRC signaling or a media access control control element (MAC CE).

The method further includes:
transmitting, by the first terminal, second indication information to a second terminal, the second indication information being used for triggering the second terminal to perform relay re-selection and/or routing update;
wherein the second terminal includes a remote terminal and/or a relay terminal connected to the first terminal.

The method further includes:
transmitting, by the first terminal, third indication information to a preceding-hop relay terminal and/or the network device, the third indication information being used for triggering the preceding-hop relay terminal and/or the network device to perform the routing update.

The transmitting, by the first terminal, the second indication information to the second terminal includes:
transmitting, by the first terminal, the second indication information to the second terminal through dedicated signaling over the sidelink interface; or
transmitting, by the first terminal, the second indication information to the second terminal through a broadcast message over the sidelink interface.

The transmitting, by the first terminal, third indication information to the preceding-hop relay terminal includes:
transmitting, by the first terminal, the third indication information to the preceding-hop relay terminal through dedicated signaling over the sidelink interface; or
transmitting, by the first terminal, the third indication information to the preceding-hop relay terminal through a broadcast message over the sidelink interface.

An embodiment of the disclosure further provides a relay state management apparatus. The apparatus includes a processing unit.

The processing unit is configured to perform activation and/or deactivation of a relay function of a first terminal based on a first channel quality or first indication information;
wherein the first terminal is a terminal having the relay function, the first channel quality is a channel quality of a sidelink interface between the first terminal and a relay terminal, and the first indication information is transmitted to the first terminal by a network device or the relay terminal.

An embodiment of the present disclosure further provides a terminal. The terminal is a first terminal, and includes a memory, a transceiver, and a processor;
wherein the memory is configured to store a computer program, the transceiver is configured to transmit and receive data under the control of the processor, and the processor is configured to read the computer program in the memory and perform:
performing activation and/or deactivation of a relay function of the first terminal based on a first channel quality or first indication information,
wherein the first terminal is a terminal having the relay function, the first channel quality is a channel quality of a sidelink interface between the first terminal and a relay terminal, and the first indication information is transmitted to the first terminal by a network device or the relay terminal.

The processor is further configured to read the computer program in the memory and perform:
obtaining a first channel quality threshold and/or a second channel quality threshold, the second channel quality threshold being higher than the first channel quality threshold; and
performing a determination as to activation and/or deactivation of the relay function based on the first channel quality and the obtained first channel quality threshold and/or second channel quality threshold.

The processor is further configured to read the computer program in the memory and perform:
obtaining the first channel quality threshold and/or the second channel quality threshold in a first manner, wherein the first manner includes at least one of:
the first channel quality threshold and/or the second channel quality threshold is pre-configured;
the first channel quality threshold and/or the second channel quality threshold is transmitted by the network device; or
the first channel quality threshold and/or the second channel quality threshold is transmitted by the relay terminal.

The processor is further configured to read the computer program in the memory and perform:
determining that the activation of the relay function is allowed in case that the first channel quality is greater than or equal to the first channel quality threshold; and/or
determining that the deactivation of the relay function is allowed in case that the first channel quality is less than or equal to the first channel quality threshold.

The processor is further configured to read the computer program in the memory and perform:
determining that the activation of the relay function is allowed in case that the first channel quality is less than or equal to the second channel quality threshold; and/or
determining that the deactivation of the relay function is allowed in case that the first channel quality is greater than or equal to the second channel quality threshold.

The processor is further configured to read the computer program in the memory and perform:
determining that the activation of the relay function is allowed in case that the first channel quality is less than or equal to the second channel quality threshold and greater than or equal to the first channel quality threshold; and/or
determining that the deactivation of the relay function is allowed in case that the first channel quality is greater than or equal to the second channel quality threshold or less than or equal to the first channel quality threshold.

In case that the first terminal determines that the activation of the relay function is allowed, a specific time of the activation of the relay function depends on the implementation of the first terminal; or
in case that the first terminal determines that the deactivation of the relay function is allowed, a specific time of the deactivation of the relay function depends on the implementation of the first terminal.

In case that the first manner includes that the first channel quality threshold and/or the second channel quality threshold is transmitted by the network device, the processor is further configured to read the computer program in the memory and perform:
obtaining the first channel quality threshold and/or the second channel quality threshold through a first broadcast message transmitted by the network device; and/or
obtaining the first channel quality threshold and/or the second channel quality threshold through dedicated signaling transmitted by the network device.

In case that the first manner includes that the first channel quality threshold and/or the second channel quality threshold is transmitted by the relay terminal, the processor is further configured to read the computer program in the memory and perform:
obtaining the first channel quality threshold and/or the second channel quality threshold through a second broadcast message transmitted by the relay terminal over the sidelink interface.

The second broadcast message includes at least one of:
a relay discovery message;
a broadcast message obtained, by the relay terminal, from the network device and forwarded by the relay terminal over the sidelink interface; or
a broadcast message of the network device obtained, by the relay terminal, from another relay terminal and forwarded by the relay terminal over the sidelink interface.

The processor is further configured to read the computer program in the memory and perform:
in case that the first terminal obtains a plurality of first channel quality thresholds and/or a plurality of second channel quality thresholds, determining the first channel quality threshold and/or the second channel quality threshold in a second manner, wherein the second manner includes at least one of:
selecting any one of the plurality of first channel quality thresholds as the first channel quality threshold;
selecting any one of the plurality of second channel quality thresholds as the second channel quality threshold;
selecting a first channel quality threshold and/or a second channel quality threshold transmitted by the relay terminal which the first terminal expects to access as the first channel quality threshold and/or the second channel quality threshold;
selecting a lowest channel quality threshold among the plurality of second channel quality thresholds as the second channel quality threshold;
selecting a highest channel quality threshold among the plurality of second channel quality thresholds as the second channel quality threshold;
selecting a lowest channel quality threshold among the plurality of first channel quality thresholds as the first channel quality threshold;
selecting a highest channel quality threshold among the plurality of first channel quality thresholds as the first channel quality threshold; or
selecting a first channel quality threshold and/or a second channel quality threshold with a highest priority in accordance with an order of priority as the first channel quality threshold and/or the second channel quality threshold.

A descending order of priority includes:
a first channel quality threshold and/or a second channel quality threshold received by the first terminal from the network device;
a first channel quality threshold and/or a second channel quality threshold received by the first terminal from the relay terminal; and
a pre-configured first channel quality threshold and/or a pre-configured second channel quality threshold.

The processor is further configured to read the computer program in the memory and perform:
in case that the first indication information indicates that the relay function is to be activated, determining that the activation of the relay function is allowed and performing the activation of the relay function; and/or
in case that the first indication information indicates that the relay function is to be deactivated, determining that the deactivation of the relay function is allowed and performing the deactivation of the relay function.

The processor is further configured to read the computer program in the memory and perform:
receiving the first indication information transmitted by the network device or the relay terminal;
wherein an RRC connection exists between the first terminal and the network device, or an end-to-end RRC connection exists between the first terminal and the network device through the relay terminal.

The first indication information is carried by RRC signaling or an MAC CE.

The processor is further configured to read the computer program in the memory and perform:
transmitting second indication information to a second terminal, the second indication information being used for triggering the second terminal to perform relay re-selection and/or routing update;
wherein the second terminal includes a remote terminal and/or a relay terminal connected to the first terminal.

The processor is further configured to read the computer program in the memory and perform:
transmitting third indication information to a preceding-hop relay terminal and/or the network device, the third indication information being used for triggering the preceding-hop relay terminal and/or the network device to perform the routing update.

The processor is further configured to read the computer program in the memory and perform:
transmitting the second indication information to the second terminal through dedicated signaling over the sidelink interface; or
transmitting the second indication information to the second terminal through a broadcast message over the sidelink interface.

The processor is further configured to read the computer program in the memory and perform:
transmitting the third indication information to the preceding-hop relay terminal through the dedicated signaling over the sidelink interface; or
transmitting the third indication information to the preceding-hop relay terminal through the broadcast message over the sidelink interface.

An embodiment of the present disclosure further provides a processor-readable storage medium having a computer program stored thereon. The computer program is configured to cause a processor to perform the method described above.

The technical solution of the present disclosure has at least the following beneficial effects.

In the relay state management method and apparatus, and the terminal according to the embodiments of the present disclosure, the terminal having the relay function performs the activation and/or deactivation of the relay function based on the channel quality of the sidelink interface between the terminal and the relay terminal or the explicitly indicated first indication information. In this way, the problem that the relay activation mechanism in the related art cannot be applied to the activation of the multi-hop sidelink relay can be solved.

### BRIEF DESCRIPTION OF THE DRAWINGS

FIG. 1 shows a schematic diagram of a UE-to-network relay in the related art;
FIG. 2 shows a schematic diagram of a UE-to-network multi-hop relay according to an embodiment of the present disclosure;
FIG. 3 shows a flowchart of a relay state management method according to an embodiment of the present disclosure;
FIG. 4 shows a schematic diagram of interactions in an Example 2 according to an embodiment of the present disclosure;
FIG. 5 shows a schematic diagram of interactions in an Example 3 according to an embodiment of the present disclosure;
FIG. 6 shows a schematic diagram of interactions in an Example 5 according to an embodiment of the present disclosure;
FIG. 7 shows a schematic diagram of interactions in an Example 6 according to an embodiment of the present disclosure;
FIG. 8 shows a schematic structural diagram of a relay state management apparatus according to an embodiment of the present disclosure; and
FIG. 9 shows a schematic structural diagram of a terminal according to an embodiment of the present disclosure.

### DETAILED DESCRIPTION

In order to make the technical problems, technical solutions, and advantages of the present disclosure more apparent, the present disclosure will be described in detail with reference to the accompanying drawings and embodiments.

FIG. 2 illustrates a block diagram of a wireless communication system to which embodiments of the present disclosure may be applied. The wireless communication system includes a remote terminal 11, a plurality of relay terminals 12 constituting a multi-hop relay, and a network device 13. The remote terminal 11 and the relay terminals 12 may also be referred to as a terminal device or user equipment (UE). It should be noted that the embodiments of the present disclosure do not limit the specific types of the remote terminal 11 and the relay terminals 12. The network device 13 may be a base station or a core network. It should be noted that in the embodiments of the present disclosure, only a base station in a New Radio (NR) system is taken as an example, but the specific type of the base station is not limited.

The term "and/or" in the embodiments of the present disclosure only represents a relationship between correlated objects, including three relationships. For example, "A and/or B" may mean three situations: A alone, both A and B, or B alone. The character "/" generally represents that there is an "or" relationship between the correlated objects preceding and following the character.

The term "a plurality of" in the embodiments of the present disclosure means two or more, and other quantifiers are similar.

The technical solutions in the embodiments of the present disclosure will be clearly and thoroughly described below with reference to the accompanying drawings in the embodiments of the present disclosure. Obviously, the embodiments described herein are only part of, rather than all of embodiments of the present disclosure. On the basis of the embodiments in the present disclosure, all other embodiments obtained by a person skilled in the art without creative effort shall fall within the scope of the present disclosure.

The technical solutions according to the embodiments of the present disclosure can be applied to various systems, in particular to a fifth-generation (5G) system. For example, the applicable systems may be a global system of mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, an advanced long term evolution (LTE-A) system, a universal mobile telecommunication system (UMTS), a worldwide interoperability for microwave access (WiMAX) system, a 5G New Radio (NR) system, etc. These systems each includes a terminal device and a network device. The system may also include a core network component, such as an evolved packet system (EPS), and a 5G System (5GS).

The terminal device involved in the embodiments of the present disclosure may be a device providing voice and/or data connectivity to a user, a handheld device having a wireless connection function, or other processing device connected to a wireless modem, etc. In different systems, the names of terminal devices may be different. For example, in a 5G system, a terminal device may be called user equipment (UE). The wireless terminal device may communicate with one or more core networks (CNs) via a radio access network (RAN). The wireless terminal device may be a mobile terminal device, such as a mobile telephone (or "cellular" telephone), or a computer having a mobile terminal device, such as a portable, pocket-sized, hand-held, computer-built-in, or vehicle-mounted mobile device, which exchanges language and/or data with the RAN. For example, a personal communication service (PCS) telephone, a cordless telephone, a session initiated protocol (SIP) telephone, a wireless local loop (WLL) station, a personal digital assistant (PDA), and the like. The wireless terminal device may also be referred to as a system, a subscriber unit, a subscriber station, a mobile station, a mobile, a remote station, an access point, a remote terminal, an access terminal, a user terminal, a user agent, and a user device, which is not limited in the embodiments of the present disclosure.

The network device involved in the embodiments of the present disclosure may be a base station, and the base station may include a plurality of cells providing services to terminals. Depending on the specific application, the base station may also be referred to as an access point, or may be a device in an access network that communicates with a wireless terminal device through one or more sectors on an air interface, or other names. The network device may be used to convert received over-the-air frames into Internet protocol (IP) packets, and vice versa, acting as a router between the wireless terminal device and the rest of the access network, where the rest of the access network may include an IP communication network. The network device can also coordinate the attribute management of the air interface. For example, the network device involved in the embodiments of the present disclosure may be a base transceiver station (BTS) in a global system for mobile communications (GSM) system or a code division multiple access (CDMA) system, a network device (NodeB) in a wide-band code division multiple access (WCDMA) system, an evolved Node B (eNB or e-NodeB) in a long term evolution (LTE) system, or a 5G base station (gNB) in a 5G next generation system. The network device may also be a home evolved Node B (HeNB), a relay node, a femto, a pico, and the like, which is not limited in the embodiments of the present disclosure. In some network architectures, the network device may include centralized unit (CU) nodes and distributed unit (DU) nodes, which may also be geographically separated.

As shown in FIG. 3, an embodiment of the present disclosure further provides a relay state management method. The method includes a step 301.

At step 301, a first terminal performs activation and/or deactivation of a relay function of the first terminal based on a first channel quality or first indication information;
wherein the first terminal is a terminal having the relay function, the first channel quality is a channel quality of a sidelink interface between the first terminal and a relay terminal, and the first indication information is transmitted to the first terminal by a network device or the relay terminal.

In at least one embodiment of the present disclosure, in case that the first terminal performs the activation and/or deactivation of the relay function based on the first channel quality, the method further includes:
obtaining, by the first terminal, a first channel quality threshold and/or a second channel quality threshold, the second channel quality threshold being higher than the first channel quality threshold; and
performing, by the first terminal, a determination as to activation and/or deactivation of the relay function based on the first channel quality and the obtained first channel quality threshold and/or second channel quality threshold.

As an optional embodiment, in case that the first terminal performs the determination as to the activation and/or deactivation of the relay function based on the first channel quality and the first channel quality threshold, the method further includes:
determining, by the first terminal, that the activation of the relay function is allowed in case that the first channel quality is greater than or equal to the first channel quality threshold; and/or
determining, by the first terminal, that the deactivation of the relay function is allowed in case that the first channel quality is less than or equal to the first channel quality threshold.

As another optional embodiment, in case that the first terminal performs the determination as to the activation and/or deactivation of the relay function based on the first channel quality and the second channel quality threshold, the method further includes:
determining, by the first terminal, that the activation of the relay function is allowed in case that the first channel quality is less than or equal to the second channel quality threshold; and/or
determining, by the first terminal, that the deactivation of the relay function is allowed in case that the first channel quality is greater than or equal to the second channel quality threshold.

As yet another optional embodiment, in case that the first terminal performs the determination as to the activation and/or deactivation of the relay function based on the first channel quality, the first channel quality threshold, and the second channel quality threshold, the method further includes:
determining, by the first terminal, that the activation of the relay function is allowed in case that the first channel quality is less than or equal to the second channel quality threshold and greater than or equal to the first channel quality threshold; and/or
determining, by the first terminal, that the deactivation of the relay function is allowed in case that the first channel quality is greater than or equal to the second channel quality threshold or less than or equal to the first channel quality threshold.

In other words, in case that the first terminal only obtains the first channel quality threshold, the first terminal performs the determination as to the activation and/or deactivation of the relay function based on the first channel quality threshold. In case that the first terminal only obtains the second channel quality threshold, the first terminal performs the determination as to the activation and/or deactivation of the relay function based on the second channel quality threshold. In case that the first terminal obtains the first channel quality threshold and the second channel quality threshold, the first terminal performs the determination as to the activation and/or deactivation of the relay function based on the first channel quality threshold and the second channel quality threshold.

In at least one embodiment of the present disclosure, the obtaining, by the first terminal, the first channel quality threshold and/or the second channel quality threshold includes:
obtaining, by the first terminal, the first channel quality threshold and/or the second channel quality threshold in a first manner, wherein the first manner includes at least one of:
the first channel quality threshold and/or the second channel quality threshold is pre-configured;
the first channel quality threshold and/or the second channel quality threshold is transmitted by the network device; or
the first channel quality threshold and/or the second channel quality threshold is transmitted by the relay terminal.

For example, the network device and/or the relay terminal transmits channel quality threshold indication information to the first terminal, the channel quality threshold indication information including the first channel quality threshold and/or the second channel quality threshold. The first channel quality threshold may also be referred to as a lower limit of channel quality of a sidelink interface, and the second channel quality threshold may also be referred to as an upper limit of channel quality of the sidelink interface.

As an optional embodiment, in case that the first manner includes that the first channel quality threshold and/or the second channel quality threshold is transmitted by the network device, the obtaining, by the first terminal, the first channel quality threshold and/or the second channel quality threshold in the first manner includes:
obtaining, by the first terminal, the first channel quality threshold and/or the second channel quality threshold through a first broadcast message transmitted by the network device; and/or
obtaining, by the first terminal, the first channel quality threshold and/or the second channel quality threshold through dedicated signaling transmitted by the network device.

As another optional embodiment, in case that the first manner includes that the first channel quality threshold and/or the second channel quality threshold is transmitted by the relay terminal, the obtaining, by the first terminal, the first channel quality threshold and/or the second channel quality threshold in the first manner includes:
obtaining, by the first terminal, the first channel quality threshold and/or the second channel quality threshold through a second broadcast message transmitted by the relay terminal over the sidelink interface.

The second broadcast message includes at least one of:
a relay discovery message;
a broadcast message obtained, by the relay terminal, from the network device and forwarded by the relay terminal over the sidelink interface; or
a broadcast message of the network device obtained, by the relay terminal, from another relay terminal and forwarded by the relay terminal over the side link interface.

In at least one embodiment of the present disclosure, in case that the first terminal obtains a plurality of first channel quality thresholds and/or a plurality of second channel quality thresholds (e.g. obtaining simultaneously a pre-configured channel quality threshold and a broadcasted channel quality threshold, or obtaining simultaneously channel quality thresholds broadcasted by a plurality of relay terminals), the method further includes:
determining, by the first terminal, the first channel quality threshold and/or the second channel quality threshold in a second manner, wherein the second manner includes at least one of:
selecting any one of the plurality of first channel quality thresholds as the first channel quality threshold;
selecting any one of the plurality of second channel quality thresholds as the second channel quality threshold;
selecting a first channel quality threshold and/or a second channel quality threshold transmitted by the relay terminal which the first terminal expects to access as the first channel quality threshold and/or the second channel quality threshold;
selecting a lowest channel quality threshold among the plurality of second channel quality thresholds as the second channel quality threshold;
selecting a highest channel quality threshold among the plurality of second channel quality thresholds as the second channel quality threshold;
selecting a lowest channel quality threshold among the plurality of first channel quality thresholds as the first channel quality threshold;
selecting a highest channel quality threshold among the plurality of first channel quality thresholds as the first channel quality threshold; or
selecting a first channel quality threshold and/or a second channel quality threshold with a highest priority in accordance with an order of priority as the first channel quality threshold and/or the second channel quality threshold.

A descending order of priority includes:
a first channel quality threshold and/or a second channel quality threshold received by the first terminal from the network device;
a first channel quality threshold and/or a second channel quality threshold received by the first terminal from the relay terminal; and
a pre-configured first channel quality threshold and/or a pre-configured second channel quality threshold.

For example, if the first channel quality threshold and/or the second channel quality threshold obtained by the first terminal includes the first channel quality threshold and/or the second channel quality threshold received by the first terminal from the network device, and the first channel quality threshold and/or the second channel quality threshold received by the first terminal from the relay terminal, then the first terminal selects the first channel quality threshold and/or the second channel quality threshold received from the network device as the first channel quality threshold and/or the second channel quality threshold for determining whether the activation and/or deactivation of the relay function is allowed.

For another example, if the first channel quality threshold and/or the second channel quality threshold obtained by the first terminal includes the first channel quality threshold and/or the second channel quality threshold received from the relay terminal, and the pre-configured first channel quality threshold and/or the pre-configured second channel quality threshold, then the first terminal selects the first channel quality threshold and/or the second channel quality threshold received from the relay terminal as the first channel quality threshold and/or the second channel quality threshold for determining whether the activation and/or deactivation of the relay function is allowed.

In at least one embodiment of the present disclosure, in case that the first terminal determines that the activation of the relay function is allowed, the specific time of the activation of the relay function depends on the implementation of the first terminal (in other words, when the relay function is activated depends on the implementation of the first terminal); or
in case that the first terminal determines that the deactivation of the relay function is allowed, the specific time of the deactivation of the relay function depends on the implementation of the first terminal (in other words, when the relay function is deactivated depends on the implementation of the first terminal).

For example, in case that the first terminal allows the activation of the relay function or allows the deactivation of the relay function, the first terminal determines the specific time of the activation or deactivation of the relay function based on related parameters measured by the first terminal, related parameters configured by the first terminal, or related parameters received by the first terminal.

In at least one embodiment of the present disclosure, that the first terminal performs the activation and/or deactivation of the relay function based on the first indication information in step 301 includes:
in case that the first indication information indicates that the relay function is to be activated, determining, by the first terminal, that the activation of the relay function is allowed and performing, by the first terminal, the activation of the relay function; and/or
in case that the first indication information indicates that the relay function is to be deactivated, determining, by the first terminal, that the deactivation of the relay function is allowed and performing, by the first terminal, the deactivation of the relay function.

As an optional embodiment, in case that the first terminal performs the activation and/or deactivation of the relay function based on the first indication information, the method further includes:
receiving, by the first terminal, the first indication information transmitted by the network device or the relay terminal;
wherein an RRC connection exists between the first terminal and the network device, or an end-to-end RRC connection exists between the first terminal and the network device through the relay terminal.

The first indication information is carried by RRC signaling or an MAC CE.

Optionally, if the first indication information is carried by the MAC CE, the embodiment of the present disclosure requires an introduction of a new logical channel identity (LCID) for identifying the MAC CE, and bits in the MAC sub-header or the payload of the MAC CE carries indication information to indicate that the relay function is to be activated and/or deactivated.

In at least one embodiment of the present disclosure, in case that the first terminal determining that the deactivation of the relay function is allowed, the method further includes:
transmitting, by the first terminal, second indication information to a second terminal, the second indication information being used for triggering the second terminal to perform relay re-selection and/or routing update;
wherein the second terminal includes a remote terminal and/or a relay terminal connected to the first terminal.

Optionally, the remote terminal and/or the relay terminal connected to the first terminal may also be referred to as the remote terminal and/or the relay terminal served by the first terminal. Specifically, the second indication information is used for triggering the remote terminal served by the first terminal to perform the relay re-selection, and/or the second indication information is used for triggering the relay terminal served by the first terminal to perform the routing update.

There may be one or more remote terminals and/or relay terminals served by the first terminal.

Optionally, the transmitting, by the first terminal, the second indication information to the second terminal includes:
transmitting, by the first terminal, the second indication information to the second terminal through dedicated signaling over the sidelink interface; or
transmitting, by the first terminal, the second indication information to the second terminal through a broadcast message over the sidelink interface. It is necessary to define a dedicated sidelink destination address for this manner.

In at least one embodiment of the present disclosure, in case that the first terminal determining that the deactivation of the relay function is allowed, the method further includes:
transmitting, by the first terminal, third indication information to a preceding-hop relay terminal and/or the network device, the third indication information being used for triggering the preceding-hop relay terminal and/or the network device to perform the routing update.

There may be one or more preceding-hop relay terminals of the first terminal.

Optionally, the transmitting, by the first terminal, third indication information to the preceding-hop relay terminal includes:
transmitting, by the first terminal, the third indication information to the preceding-hop relay terminal through dedicated signaling over the sidelink interface; or
transmitting, by the first terminal, the third indication information to the preceding-hop relay terminal through a broadcast message over the side link interface. It is necessary to define a dedicated sidelink destination address for this manner.

In order to more clearly describe the relay state management method provided by the embodiment of the present disclosure, the following description is made with reference to several examples.

### Example 1: relay function activation

The first terminal obtains the sidelink interface channel quality threshold configuration information pre-configured for the determination as to the activation of the relay function. The channel quality threshold indication information may include one channel quality threshold or two channel quality thresholds (if two channel quality thresholds are included, one is an upper limit of channel quality of the sidelink interface and the other is a lower limit of channel quality of the sidelink interface).

The first terminal performs the determination as to the activation of the relay function based on the channel quality of the sidelink interface between the first terminal and the relay terminal, and determines that the activation of the relay function is allowed if the "channel quality threshold" is met. When the relay function is activated depends on the terminal implementation.

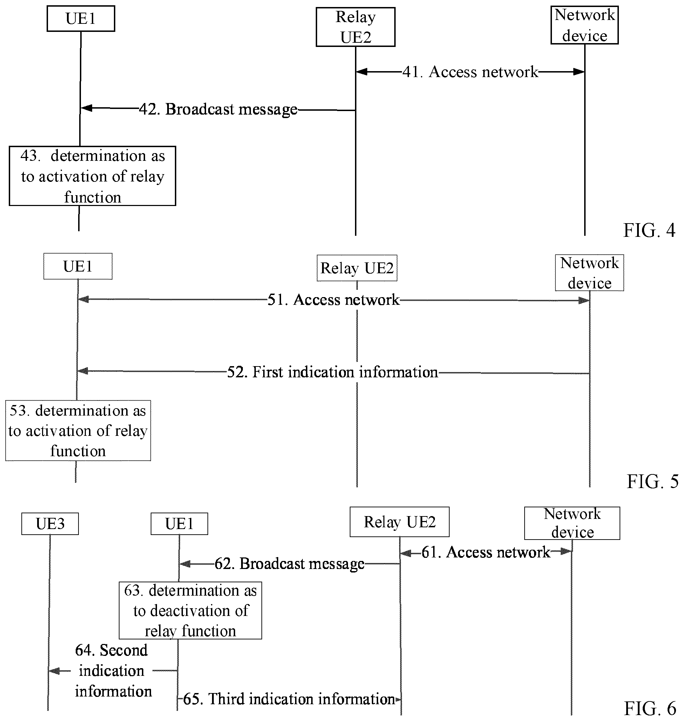

### Example 2: relay function activation. Reference can be made to FIG. 4.

At step 41, a relay UE2 accesses a network.

At step 42, the relay UE2 transmits a broadcast message.

In the step 42, the relay UE2 carries the sidelink interface channel quality threshold indication information for the activation and/or deactivation of the relay function in the broadcast message over the sidelink interface. The channel quality threshold indication information includes: the first channel quality threshold and/or the second channel quality threshold.

The broadcast message may be, but is not limited to:
a relay discovery message over the sidelink interface;
a broadcast message that is obtained from the network device and forwarded by the relay UE2; or
a broadcast message of the network device that is obtained from another relay UE and forwarded by the relay UE2.

At step 43, UE1 (i.e., the first terminal) performs the determination as to the activation of the relay function based on the channel quality of the sidelink interface between the first terminal and the relay terminal (i.e., UE2) and the "first channel quality threshold and/or the second channel quality threshold", and determines that the activation of the relay function is allowed if the "first channel quality threshold and/or the second channel quality threshold" is met. When the relay function is activated depends on the terminal implementation.

### Example 3: relay function activation. Reference can be made to FIG. 5.

At step 51, the relay UE2 accesses the network.

At step 52, the network device transmits the first indication information to UE1 (i.e., the first terminal).

The first indication information may be transmitted using the end-to-end RRC signaling or MAC CE between the network device and the UE1. The end-to-end RRC signaling or MAC CE between the network device and the UE 1 means that the RRC signaling or the MAC CE is the end-to-end signaling between UE1 and the network device, however the RRC signaling or the MAC CE needs to be forwarded via the relay UE2. If the MAC CE is used, a new LCID is introduced to identify the MAC CE, and the activation and/or deactivation of the relay function is indicated by the indication information carried by the bits in the MAC sub-header or the payload of the MAC CE.

At Step 53, UE1 performs the determination as to the activation of the relay function.

UE1 receives the explicitly indicated first indication information transmitted by the network device. In case that the first indication information indicates that UE1 is to activate the relay function, UE1 needs to activate the relay function immediately.

### Example 4: relay function deactivation

The first terminal obtains the sidelink interface channel quality threshold configuration information pre-configured for the determination as to the deactivation of the relay function. The channel quality threshold indication information may include one channel quality threshold or two channel quality thresholds (if two channel quality thresholds are included, one is the upper limit of channel quality of the sidelink interface and the other is the lower limit of channel quality of the sidelink interface).

The first terminal performs the determination as to the deactivation of the relay function based on the channel quality of the sidelink interface between the first terminal and the relay terminal, and determines that the first terminal needs to deactivate the relay function if the "channel quality threshold" is not met by the first terminal.

In case that the first terminal determining that the relay needs to be deactivated, the first terminal transmits the second indication information to the remote UE or the relay UE served by the first terminal. That is, in case that another remote UE or relay UE is connected to the first terminal, the first terminal needs to transmit the second indication information to the other remote UE and/or relay UE served by the first terminal. The second indication information is used for triggering the remote UE served by the first terminal to perform the relay re-selection, and/or triggering the relay UE served by the first terminal to perform a routing update operation.

It should be noted that there may be one or more remote UEs or relay UEs served by the first terminal. If there are multiple remote UEs or relay UEs served by the first terminal, the first terminal may transmit the second indication information in the following two manners.

Manner 1: notification via the dedicated signaling over the sidelink interface.

Manner 2: notification via the broadcast over the sidelink interface. It is necessary to define a dedicated sidelink destination address for this manner.

The first terminal transmits the third indication information to its preceding-hop node (i.e., the preceding-hop relay terminal) and/or the network device. A sequential relationship between the transmission of the second indication information and the transmission of the third indication information is not required.

In case that the first terminal determines to perform the deactivation of the relay function, it also needs to perform the following operation: the first terminal also needs to transmit the third indication information to the preceding-hop relay node and/or the network device, wherein the third indication information is used for triggering the preceding-hop node or the network device to perform the routing update.

It should be noted that there may be one or more preceding-hop nodes and/or network devices of the first terminal. If there are multiple preceding-hop nodes and/or network devices of the first terminal, the first terminal may transmit the third indication information in the following two manners.

Manner 1: notification via the dedicated signaling over the sidelink interface.

Manner 2: notification via the broadcast over the sidelink interface. It is necessary to define a dedicated sidelink destination address for this manner.

Example 5: relay function deactivation. Reference can be made to FIG. 6.

At step 61, the relay UE2 accesses the network.

At step 62, the relay UE2 transmits the broadcast message.

In this step, the relay UE2 carries the sidelink interface channel quality threshold indication information for the activation and/or deactivation of the relay function in the broadcast message over the sidelink interface. The channel quality threshold indication information includes: the first channel quality threshold and/or the second channel quality threshold.

The broadcast message may be, but is not limited to:
a relay discovery message of the sidelink interface;
a broadcast message that is obtained from the network device and forwarded by the relay UE2; or
a broadcast message of the network device that is obtained from another relay UE and forwarded by the relay UE2.

At step 63, UE1 (i.e., the first terminal) performs the determination as to the deactivation of the relay function based on the channel quality of the sidelink interface between the first terminal and the relay terminal and "the first channel quality threshold and/or the second channel quality threshold", and determines that the deactivation of the relay function is allowed when "the first channel quality threshold and/or the second channel quality threshold" is not met. When the relay function is deactivated depends on the terminal implementation.

At step 64, in case that UE1 determines that the relay needs to be deactivated, UE1 transmits the second indication information to UE3 (i.e., the second terminal, the remote UE or the relay UE served by the first terminal). That is, in case that another remote UE or relay UE is connected to UE1, UE1 needs to transmit the second indication information to the other remote UE and/or the relay UE served by UE1. The second indication information is used for triggering the remote UE served by the UE 1 to perform the relay re-selection and/or triggering the relay UE served by the UE1 to perform the path update operation.

It should be noted that there may be one or more remote UEs or relay UEs served by UE1. If there are multiple remote UEs or relay UEs served by UE1, UE1 may transmit the second indication information in the following two manners.

Manner 1: notification via the dedicated signaling over the sidelink interface.

Manner 2: notification via the broadcast over the sidelink interface. It is necessary to define a dedicated sidelink destination address for this manner.

At step 65, UE1 transmits the third indication information to its preceding-hop node (i.e., the preceding-hop relay terminal, such as the relay UE2) and/or the network device. A sequential relationship between the transmission of the second indication information and the transmission of the third indication information is not required.

In case that UE1 determines to perform the deactivation of the relay function, it also needs to perform the following operation: UE1 also needs to transmit the third indication information to the preceding-hop relay node and/or the network device, wherein the third indication information is used for triggering the preceding-hop node or the network device to perform the path update.

It should be noted that there may be one or more preceding-hop nodes and/or network devices of the UE1. If there are multiple preceding-hop nodes and/or network devices of the UE1, UE1 may transmit the third indication information in the following two manners.

Manner 1: notification via the dedicated signaling over the sidelink interface.

Manner 2: notification via the broadcast over the sidelink interface. It is necessary to define a dedicated sidelink destination address for this manner.

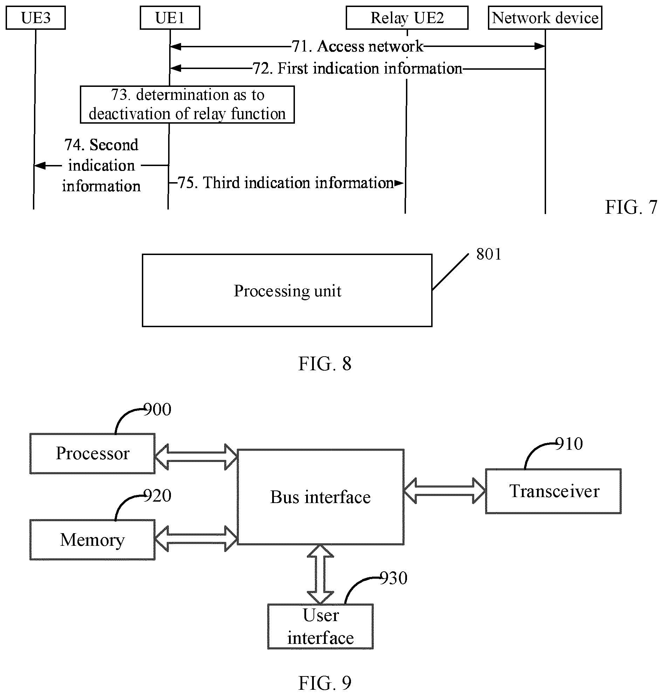

Example 6, relay function deactivation. Reference can be made to FIG. 7.

At step 71, the relay UE2 accesses the network.

At step 72, the network device transmits the first indication information to UE1 (i.e., the first terminal).

The first indication information may be transmitted using the end-to-end RRC signaling or MAC CE between the network device and UE1. In case that the MAC CE is used, a new LCID is introduced to identify the MAC CE, and the activation and/or deactivation of the relay function is indicated by the indication information carried by the bits in the MAC sub-header or the payload of the MAC CE.

At Step 73, UE1 performs the determination as to the deactivation of the relay function.

UE1 receives the explicitly indicated first indication information transmitted by the network device. In case that the first indication information indicates that UE1 is to deactivate the relay function, UE1 needs to deactivate the relay function immediately.

At step 74, in case that UE1 determines that the relay function needs to be deactivated, UE1 transmits the second indication information to UE3 (i.e., the second terminal, the remote UE or the relay UE served by the first terminal). That is, in case that another remote UE or relay UE is connected to UE1, UE 1 needs to transmit the second indication information to the other remote UE and/or the relay UE served by UE1. The second indication information is used for triggering the remote UE served by the UE1 to perform the relay re-selection and/or triggering the relay UE served by the UE1 to perform the path update operation.

It should be noted that there may be one or more remote UEs or relay UEs served by UE1. If there are multiple remote UEs or relay UEs served by UE1, UE1 may transmit the second indication information in the following two manners.

Manner 1: notification via the dedicated signaling over the sidelink interface.

Manner 2: notification via the broadcast over the sidelink interface. It is necessary to define a dedicated sidelink destination address for this manner.

At step 75, UE1 transmits the third indication information to its preceding-hop node (i.e., the preceding-hop relay terminal, such as the relay UE2) and/or the network device. A sequential relationship between the transmission of the second indication information and the transmission of the third indication information is not required.

In case that UE1 determines to perform the deactivation of the relay function, it also needs to perform the following operation: UE1 also needs to transmit the third indication information to the preceding-hop relay node and/or the network device, wherein the third indication information is used for triggering the preceding-hop node or the network device to perform the path update.

It should be noted that there may be one or more preceding-hop nodes and/or network devices of the UE1. If there are multiple preceding-hop nodes and/or network devices of the UE1, UE1 may transmit the third indication information in the following two manners.

Manner 1: notification via the dedicated signaling over the sidelink interface.

Manner 2: notification via the broadcast over the sidelink interface. It is necessary to define a dedicated sidelink destination address for this manner.

In the embodiment of the present disclosure, the terminal having the relay function performs the activation and/or deactivation of the relay function based on the channel quality of the sidelink interface between the terminal and the relay terminal or the explicitly indicated first indication information. In this way, the problem that the relay activation mechanism in the related art cannot be applied to the activation of the multi-hop sidelink relay can be solved.

As shown in FIG. 8, an embodiment of the present disclosure further provides a relay state management apparatus. The apparatus includes a processing unit 801.

The processing unit 801 is configured to perform activation and/or deactivation of a relay function of a first terminal based on a first channel quality or first indication information.

The first terminal is a terminal having the relay function. The first channel quality is a channel quality of a side link interface between the first terminal and a relay terminal. The first indication information is transmitted to the first terminal by a network device or the relay terminal.

As an optional embodiment, the apparatus further includes a threshold obtaining unit and a determination unit.

The threshold obtaining unit is configured to obtain a first channel quality threshold and/or a second channel quality threshold. The second channel quality threshold is higher than the first channel quality threshold.

The determining unit is configured to perform a determination as to activation and/or deactivation of the relay function based on the first channel quality and the obtained first channel quality threshold and/or second channel quality threshold.

As an optional embodiment, the threshold obtaining unit includes a threshold obtaining subunit.

The threshold obtaining subunit is configured to obtain the first channel quality threshold and/or the second channel quality threshold in a first manner. The first manner includes at least one of:
the first channel quality threshold and/or the second channel quality threshold is pre-configured;
the first channel quality threshold and/or the second channel quality threshold is transmitted by the network device; or
the first channel quality threshold and/or the second channel quality threshold is transmitted by the relay terminal.

As an optional embodiment, the apparatus further includes:
a first determining unit, configured to determine that the activation of the relay function is allowed in case that the first channel quality is greater than or equal to the first channel quality threshold; and/or
a second determining unit, configured to determine that the deactivation of the relay function is allowed in case that the first channel quality is less than or equal to the first channel quality threshold.

As an optional embodiment, the apparatus further includes:
a third determining unit, configured to determine that the activation of the relay function is allowed in case that the first channel quality is less than or equal to the second channel quality threshold, and/or
a fourth determining unit, configured to determine that the deactivation of the relay function is allowed in case that the first channel quality is greater than or equal to the second channel quality threshold.

As an optional embodiment, the apparatus further includes:
a fifth determining unit, configured to determine that the activation of the relay function is allowed in case that the first channel quality is less than or equal to the second channel quality threshold and greater than or equal to the first channel quality threshold; and/or
a sixth determining unit, configured to determine that the deactivation of the relay function is allowed in case that the first channel quality is greater than or equal to the second channel quality threshold or less than or equal to the first channel quality threshold.

As an optional embodiment, in case that the first terminal determines that the activation of the relay function is allowed, a specific time of the activation of the relay function depends on the implementation of the first terminal; or
in case that the first terminal determines that the deactivation of the relay function is allowed, a specific time of the deactivation of the relay function depends on the implementation of the first terminal.

As an optional embodiment, in case that the first manner includes that the first channel quality threshold and/or the second channel quality threshold is transmitted by the network device, the threshold obtaining unit includes:
a second threshold obtaining subunit, configured to obtain the first channel quality threshold and/or the second channel quality threshold through a first broadcast message transmitted by the network device; and/or
a third threshold obtaining subunit, configured to obtain the first channel quality threshold and/or the second channel quality threshold through dedicated signaling transmitted by the network device.

As an optional embodiment, in case that the first manner includes that the first channel quality threshold and/or the second channel quality threshold is transmitted by the relay terminal, the threshold obtaining unit includes:
a fourth threshold obtaining subunit, configured to obtain the first channel quality threshold and/or the second channel quality threshold through a second broadcast message transmitted by the relay terminal over the sidelink interface.

As an optional embodiment, the second broadcast message includes at least one of:
a relay discovery message;
a broadcast message obtained, by the relay terminal, from the network device and forwarded by the relay terminal over the sidelink interface; or
a broadcast message of the network device obtained, by the relay terminal, from another relay terminal and forwarded by the relay terminal over the sidelink interface.

As an optional embodiment, the apparatus further includes a determining unit.

The determining unit is configured to, in case that the first terminal obtains a plurality of first channel quality thresholds and/or a plurality of second channel quality thresholds, determine the first channel quality threshold and/or the second channel quality threshold in a second manner. The second manner includes at least one of:
selecting any one of the plurality of first channel quality thresholds as the first channel quality threshold;
selecting any one of the plurality of second channel quality thresholds as the second channel quality threshold;
selecting a first channel quality threshold and/or a second channel quality threshold transmitted by the relay terminal which the first terminal expects to access as the first channel quality threshold and/or the second channel quality threshold;
selecting a lowest channel quality threshold among the plurality of second channel quality thresholds as the second channel quality threshold;
selecting a highest channel quality threshold among the plurality of second channel quality thresholds as the second channel quality threshold;
selecting a lowest channel quality threshold among the plurality of first channel quality thresholds as the first channel quality threshold;
selecting a highest channel quality threshold among the plurality of first channel quality thresholds as the first channel quality threshold; or
selecting a first channel quality threshold and/or a second channel quality threshold with a highest priority in accordance with an order of priority as the first channel quality threshold and/or the second channel quality threshold.

As an optional embodiment, a descending order of priority includes:
a first channel quality threshold and/or a second channel quality threshold received by the first terminal from the network device;
a first channel quality threshold and/or a second channel quality threshold received by the first terminal from the relay terminal; and
a pre-configured first channel quality threshold and/or a pre-configured second channel quality threshold.

As an optional embodiment, the processing unit includes:
a first processing subunit, configured to, in case that the first indication information indicates that the relay function is to be activated, determine that the activation of the relay function is allowed and perform the activation of the relay function; and/or
a second processing subunit, configured to, in case that the first indication information indicates that the relay function is to be deactivated, determine that the deactivation of the relay function is allowed and perform the deactivation of the relay function.

As an optional embodiment, the apparatus further includes an information receiving unit.

The information receiving unit is configured to receive the first indication information transmitted by the network device or the relay terminal;
wherein an RRC connection exists between the first terminal and the network device, or an end-to-end RRC connection exists between the first terminal and the network device through the relay terminal.

As an optional embodiment, the first indication information is carried by RRC signaling or an MAC CE.

As an optional embodiment, the apparatus further includes a first transmitting unit.

The first transmitting unit is configured to transmit second indication information to a second terminal. The second indication information is used for triggering the second terminal to perform relay re-selection and/or routing update.

The second terminal includes a remote terminal and/or a relay terminal connected to the first terminal.

As an optional embodiment, the apparatus further includes a second transmitting unit.

The second transmitting unit is configured to transmit third indication information to a preceding-hop relay terminal and/or the network device. The third indication information is used for triggering the preceding-hop relay terminal and/or the network device to perform the routing update.

As an optional embodiment, the first transmitting unit includes a first transmitting subunit.

The first transmitting subunit is configured to transmit the second indication information to the second terminal through dedicated signaling over the sidelink interface, or configured to transmit the second indication information to the second terminal through a broadcast message over the sidelink interface.

As an optional embodiment, the second transmitting unit includes a second transmitting subunit.

The second transmitting subunit is configured to transmit the third indication information to the preceding-hop relay terminal through the dedicated signaling over the sidelink interface; or configured to transmit the third indication information to the preceding-hop relay terminal through the broadcast message over the sidelink interface.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present disclosure. The aforementioned storage media include: universal serial bus (USB) flash drive, removable hard disk, read-only memory (ROM), random access memory (RAM), magnetic disk, optical disc or other media that can store program codes.

In the embodiment of the present disclosure, the terminal having the relay function performs the activation and/or deactivation of the relay function based on the channel quality of the sidelink interface between the terminal and the relay terminal or the explicitly indicated first indication information. In this way, the problem that the relay activation mechanism in the related art cannot be applied to the activation of the multi-hop sidelink relay can be solved.

It should be noted that the relay state management apparatus provided by the embodiment of the present disclosure is an apparatus capable of performing the aforementioned relay state management method, so all the embodiments of the relay state management method are applicable to the apparatus and can achieve the same or similar beneficial effects.

As shown in FIG. 9, an embodiment of the present disclosure further provides a terminal. The terminal is a first terminal, and includes a memory 920, a transceiver 910, and a processor 900.

The memory 920 is configured to store a computer program. The transceiver 910 is configured to transmit and receive data under the control of the processor 900. The processor 900 is configured to read the computer program in the memory 920 and perform the following operation:
performing activation and/or deactivation of a relay function of the first terminal based on a first channel quality or first indication information,
wherein the first terminal is a terminal having the relay function, the first channel quality is a channel quality of a sidelink interface between the first terminal and a relay terminal, and the first indication information is transmitted to the first terminal by a network device or the relay terminal.

As an optional embodiment, the processor 900 is further configured to read the computer program in the memory and perform the following operations:
obtaining a first channel quality threshold and/or a second channel quality threshold, the second channel quality threshold being higher than the first channel quality threshold; and
performing a determination as to activation and/or deactivation of the relay function based on the first channel quality and the obtained first channel quality threshold and/or second channel quality threshold.

As an optional embodiment, the processor 900 is further configured to read the computer program in the memory and perform:
obtaining the first channel quality threshold and/or the second channel quality threshold in a first manner, wherein the first manner includes at least one of:
the first channel quality threshold and/or the second channel quality threshold is pre-configured;
the first channel quality threshold and/or the second channel quality threshold is transmitted by the network device; or
the first channel quality threshold and/or the second channel quality threshold is transmitted by the relay terminal.

As an optional embodiment, the processor 900 is further configured to read the computer program in the memory and perform the following operations:
determining that the activation of the relay function is allowed in case that the first channel quality is greater than or equal to the first channel quality threshold; and/or
determining that the deactivation of the relay function is allowed in case that the first channel quality is less than or equal to the first channel quality threshold.

As an optional embodiment, the processor 900 is further configured to read the computer program in the memory and perform the following operations:
determining that the activation of the relay function is allowed in case that the first channel quality is less than or equal to the second channel quality threshold; and/or
determining that the deactivation of the relay function is allowed in case that the first channel quality is greater than or equal to the second channel quality threshold.

As an optional embodiment, the processor 900 is further configured to read the computer program in the memory and perform the following operations:
determining that the activation of the relay function is allowed in case that the first channel quality is less than or equal to the second channel quality threshold and greater than or equal to the first channel quality threshold; and/or
determining that the deactivation of the relay function is allowed in case that the first channel quality is greater than or equal to the second channel quality threshold or less than or equal to the first channel quality threshold.

As an optional embodiment, in case that the first terminal determines that the activation of the relay function is allowed, a specific time of the activation of the relay function depends on the implementation of the first terminal; or
in case that the first terminal determines that the deactivation of the relay function is allowed, a specific time of the deactivation of the relay function depends on the implementation of the first terminal.

As an optional embodiment, in case that the first manner includes that the first channel quality threshold and/or the second channel quality threshold is transmitted by the network device, the processor 900 is further configured to read the computer program in the memory and perform the following operations:
obtaining the first channel quality threshold and/or the second channel quality threshold through a first broadcast message transmitted by the network device; and/or
obtaining the first channel quality threshold and/or the second channel quality threshold through dedicated signaling transmitted by the network device.

As an optional embodiment, in case that the first manner includes that the first channel quality threshold and/or the second channel quality threshold is transmitted by the relay terminal, the processor 900 is further configured to read the computer program in the memory and perform:
obtaining the first channel quality threshold and/or the second channel quality threshold through a second broadcast message transmitted by the relay terminal over the sidelink interface.

As an optional embodiment, the second broadcast message includes at least one of:
a relay discovery message;
a broadcast message obtained, by the relay terminal, from the network device and forwarded by the relay terminal over the sidelink interface; or
a broadcast message of the network device obtained, by the relay terminal, from another relay terminal and forwarded by the relay terminal over the sidelink interface.

As an optional embodiment, the processor 900 is further configured to read the computer program in the memory and perform:
in case that the first terminal obtains a plurality of first channel quality thresholds and/or a plurality of second channel quality thresholds, determining the first channel quality threshold and/or the second channel quality threshold in a second manner, wherein the second manner includes at least one of:
selecting any one of the plurality of first channel quality thresholds as the first channel quality threshold;
selecting any one of the plurality of second channel quality thresholds as the second channel quality threshold;
selecting a first channel quality threshold and/or a second channel quality threshold transmitted by the relay terminal which the first terminal expects to access as the first channel quality threshold and/or the second channel quality threshold;
selecting a lowest channel quality threshold among the plurality of second channel quality thresholds as the second channel quality threshold;
selecting a highest channel quality threshold among the plurality of second channel quality thresholds as the second channel quality threshold;
selecting a lowest channel quality threshold among the plurality of first channel quality thresholds as the first channel quality threshold;
selecting a highest channel quality threshold among the plurality of first channel quality thresholds as the first channel quality threshold; or
selecting a first channel quality threshold and/or a second channel quality threshold with a highest priority in accordance with an order of priority as the first channel quality threshold and/or the second channel quality threshold.

As an optional embodiment, a descending order of priority includes:
a first channel quality threshold and/or a second channel quality threshold received by the first terminal from the network device;
a first channel quality threshold and/or a second channel quality threshold received by the first terminal from the relay terminal; and
a pre-configured first channel quality threshold and/or a pre-configured second channel quality threshold.

As an optional embodiment, the processor 900 is further configured to read the computer program in the memory and perform the following operations:
in case that the first indication information indicates that the relay function is to be activated, determining that the activation of the relay function is allowed and performing the activation of the relay function; and/or
in case that the first indication information indicates that the relay function is to be deactivated, determining that the deactivation of the relay function is allowed and performing the deactivation of the relay function.

As an optional embodiment, the processor 900 is further configured to read the computer program in the memory and perform:
receiving the first indication information transmitted by the network device or the relay terminal;
wherein an RRC connection exists between the first terminal and the network device, or an end-to-end RRC connection exists between the first terminal and the network device through the relay terminal.

As an optional embodiment, the first indication information is carried by RRC signaling or an MAC CE.

As an optional embodiment, the processor 900 is further configured to read a computer program in the memory and perform:
transmitting second indication information to a second terminal, the second indication information being used for triggering the second terminal to perform relay re-selection and/or routing update;
wherein the second terminal includes a remote terminal and/or a relay terminal connected to the first terminal.

As an optional embodiment, the processor 900 is further configured to read the computer program in the memory and perform:
transmitting third indication information to a preceding-hop relay terminal and/or the network device, the third indication information being used for triggering the preceding-hop relay terminal and/or the network device to perform the routing update.

As an optional embodiment, the processor 900 is further configured to read the computer program in the memory and perform:
transmitting the second indication information to the second terminal through dedicated signaling over the sidelink interface; or
transmitting the second indication information to the second terminal through a broadcast message over the sidelink interface.

As an optional embodiment, the processor 900 is further configured to read the computer program in the memory and perform:
transmitting the third indication information to the preceding-hop relay terminal through the dedicated signaling over the sidelink interface; or
transmitting the third indication information to the preceding-hop relay terminal through the broadcast message over the sidelink interface.

In FIG. 9, a bus architecture may include any quantity of interconnected buses and bridges, and connects various circuits including one or more processors represented by the processor 900 and a memory represented by the memory 920. The bus architecture may also connect various other circuits such as peripherals, voltage regulators and power management circuits, which is well known in the art. Therefore, a detailed description thereof is omitted herein. A bus interface provides an interface. The transceiver 910 may be multiple elements, i.e., a transmitter and a receiver, to allow for communication with various other apparatuses on the transmission media. These transmission media include wireless channel, wired channel, optic fiber or the like. For different user equipment, the user interface 930 may be an interface capable of externally or internally connecting a required device, and the connected device includes, but not limited to, a keypad, a display, a speaker, a microphone, a joystick and the like.

The processor 900 is responsible for supervising the bus architecture and normal operations, and the memory 920 may store the data being used by the processor 900 during operations.

Optionally, the processor 900 may be a central processing unit (CPU), an application specific integrated circuit (ASIC), a field-programmable gate array (FPGA) or a complex programmable logic device (CPLD). The processor may also adopt a multi-core architecture.

The processor is configured to execute any of the methods provided in the embodiments of the present disclosure according to obtained executable instructions by calling a computer program stored in the memory. The processor and the memory may also be physically separated.

In the embodiment of the present disclosure, the terminal having the relay function performs the activation and/or deactivation of the relay function based on the channel quality of the sidelink interface between the terminal and the relay terminal or the explicitly indicated first indication information. In this way, the problem that the relay activation mechanism in the related art cannot be applied to the activation of the multi-hop sidelink relay can be solved.

It should be noted that the terminal provided by the embodiment of the present disclosure can realize all the method steps realized by the method embodiment and can achieve the same technical effect, and the parts and beneficial effects which are the same as those of the method embodiment in the present embodiment will not be detailed here.

An embodiment of the present disclosure further provides a processor-readable storage medium storing thereon a computer program. The computer program is configured to cause a processor to perform the relay state management method described above. The processor readable storage medium may be any available medium or data storage device that can be accessed by the processor, including but not limited to magnetic storage (such as floppy disk, hard disk, magnetic tape, magneto-optical disk (MO)), optical storage (such as compact disc (CD), digital versatile disc (DVD), blue-ray disc (BD), high-definition versatile disc (HVD)), and semiconductor memory (such as ROM, erasable programmable ROM (EPROM), electrically erasable programmable ROM (EEPROM), non-volatile memory (NAND FLASH), solid-state drive or solid state disk (SSD)), etc.

Those skilled in the art should appreciate that the embodiments of the present disclosure may be provided as a method, a system, or a computer program product. Therefore, the present disclosure may take the form of complete hardware embodiments, complete software embodiments, or embodiments combining software and hardware. Moreover, the present disclosure may take the form of a computer program product implemented on one or more computer usable storage media (including but not limited to magnetic disk storage, optical storage, etc.) including a computer usable program code.

The present disclosure is described with reference to the flow chart and/or the block diagram of the method, device (system), and computer program product according to the embodiments of the present disclosure. It should be appreciated that each of processes and/or blocks in a flow chart and/or block diagram, and a combination of the processes and/or blocks in the flow chart and/or block diagram may be implemented by computer executable instructions. These computer executable instructions may be provided to a processor of a general-purpose computer, a specialized computer, an embedded processing device, or other programmable data processing devices to generate a machine, such that the instructions, which are executed via the processor of the computer or other programmable data processing terminal device, create means for implementing the functions specified in the flow diagram flow or flows and/or block diagram block or blocks.

These processor executable instructions may also be stored in processor-readable memory that may guide computers or other programmable data processing devices to work in a specific way, causing the instructions stored in the processor readable memory to generate a manufacturing product including instruction devices that implement the functions specified in the flow diagram flow or flows and/or block diagram block or blocks.

These processor executable instructions may also be loaded onto a computer or other programmable data processing device, enabling a series of operational steps to be performed on the computer or other programmable device to generate computer-implemented processing, such that the instructions which are executed on the computer or other programmable terminal device provide steps for implementing the functions specified in the flow diagram flow or flows and/or block diagram block or blocks.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, or may be implemented independently. The processing element mentioned here may be an integrated circuit with signal processing capability. In the implementation process, the various steps of the above method or the above various modules may be implemented by an integrated logic circuit in hardware form in a processor element or instructions in the form of software.

For example, the various modules, units, subunits or submodules may be one or more integrated circuits configured to implement the above methods, such as one or more application specific integrated circuits (ASIC), or one or more microprocessors (digital signal processor, DSP), or one or more field programmable gate arrays (FPGA). As another example, when a module described above is implemented in the form of program codes called by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

The embodiments of the present disclosure are described above with reference to the drawings, but the present disclosure is not limited to the specific embodiments described above, which are merely illustrative and not limiting. Many modifications may be made by one of ordinary skill in the art in light of the present disclosure without departing from the scope of the claim, and the present disclosure is also intended to encompass these modifications.

## Claims

1. A relay state management method, comprising:
performing, by a first terminal, activation and/or deactivation of a relay function of the first terminal based on a first channel quality or first indication information,
wherein the first terminal is a terminal having the relay function, the first channel quality is a channel quality of a sidelink interface between the first terminal and a relay terminal, and the first indication information is transmitted to the first terminal by a network device or the relay terminal.

2. The relay state management method according to claim 1, further comprising:
obtaining, by the first terminal, a first channel quality threshold and/or a second channel quality threshold, the second channel quality threshold being higher than the first channel quality threshold; and
performing, by the first terminal, a determination as to activation and/or deactivation of the relay function based on the first channel quality and the obtained first channel quality threshold and/or second channel quality threshold.

3. The relay state management method according to claim 2, wherein the obtaining, by the first terminal, the first channel quality threshold and/or the second channel quality threshold comprises:
obtaining, by the first terminal, the first channel quality threshold and/or the second channel quality threshold in a first manner, wherein the first manner comprises at least one of:
the first channel quality threshold and/or the second channel quality threshold is pre-configured;
the first channel quality threshold and/or the second channel quality threshold is transmitted by the network device; or
the first channel quality threshold and/or the second channel quality threshold is transmitted by the relay terminal.

4. The relay state management method according to claim 2, wherein in case that the first terminal performs the determination as to the activation and/or deactivation of the relay function based on the first channel quality and the first channel quality threshold, the method further comprises:
determining, by the first terminal, that the activation of the relay function is allowed in case that the first channel quality is greater than or equal to the first channel quality threshold; and/or
determining, by the first terminal, that the deactivation of the relay function is allowed in case that the first channel quality is less than or equal to the first channel quality threshold.

5. The relay state management method according to claim 2, wherein in case that the first terminal performs the determination as to the activation and/or deactivation of the relay function based on the first channel quality and the second channel quality threshold, the method further comprises:
determining, by the first terminal, that the activation of the relay function is allowed in case that the first channel quality is less than or equal to the second channel quality threshold; and/or
determining, by the first terminal, that the deactivation of the relay function is allowed in case that the first channel quality is greater than or equal to the second channel quality threshold.

6. The relay state management method according to claim 2, wherein in case that the first terminal performs the determination as to the activation and/or deactivation of the relay function based on the first channel quality, the first channel quality threshold, and the second channel quality threshold, the method further comprises:
determining, by the first terminal, that the activation of the relay function is allowed in case that the first channel quality is less than or equal to the second channel quality threshold and greater than or equal to the first channel quality threshold; and/or
determining, by the first terminal, that the deactivation of the relay function is allowed in case that the first channel quality is greater than or equal to the second channel quality threshold or less than or equal to the first channel quality threshold.

7. The relay state management method according to any one of claims 4 to 6, wherein
in case that the first terminal determines that the activation of the relay function is allowed, a specific time of the activation of the relay function depends on implementation of the first terminal; or
in case that the first terminal determines that the deactivation of the relay function is allowed, a specific time of the deactivation of the relay function depends on the implementation of the first terminal.

8. The relay state management method according to claim 3, wherein in case that the first manner comprises that the first channel quality threshold and/or the second channel quality threshold is transmitted by the network device, the obtaining, by the first terminal, the first channel quality threshold and/or the second channel quality threshold in the first manner comprises:
obtaining, by the first terminal, the first channel quality threshold and/or the second channel quality threshold through a first broadcast message transmitted by the network device; and/or
obtaining, by the first terminal, the first channel quality threshold and/or the second channel quality threshold through dedicated signaling transmitted by the network device.

9. The relay state management method according to claim 3, wherein in case that the first manner comprises that the first channel quality threshold and/or the second channel quality threshold is transmitted by the relay terminal, the obtaining, by the first terminal, the first channel quality threshold and/or the second channel quality threshold in the first manner comprises:
obtaining, by the first terminal, the first channel quality threshold and/or the second channel quality threshold through a second broadcast message transmitted by the relay terminal over the sidelink interface.

10. The relay state management method according to claim 9, wherein the second broadcast message comprises at least one of:
a relay discovery message;
a broadcast message obtained, by the relay terminal, from the network device and forwarded by the relay terminal over the sidelink interface; or
a broadcast message of the network device obtained, by the relay terminal, from another relay terminal and forwarded by the relay terminal over the side link interface.

11. The relay state management method according to claim 2 or 3, further comprising:
in case that the first terminal obtains a plurality of first channel quality thresholds and/or a plurality of second channel quality thresholds, determining, by the first terminal, the first channel quality threshold and/or the second channel quality threshold in a second manner, wherein the second manner comprises at least one of:
selecting any one of the plurality of first channel quality thresholds as the first channel quality threshold;
selecting any one of the plurality of second channel quality thresholds as the second channel quality threshold;
selecting a first channel quality threshold and/or a second channel quality threshold transmitted by the relay terminal which the first terminal expects to access as the first channel quality threshold and/or the second channel quality threshold;
selecting a lowest channel quality threshold among the plurality of second channel quality thresholds as the second channel quality threshold;
selecting a highest channel quality threshold among the plurality of second channel quality thresholds as the second channel quality threshold;
selecting a lowest channel quality threshold among the plurality of first channel quality thresholds as the first channel quality threshold;
selecting a highest channel quality threshold among the plurality of first channel quality thresholds as the first channel quality threshold; or
selecting a first channel quality threshold and/or a second channel quality threshold with a highest priority in accordance with an order of priority as the first channel quality threshold and/or the second channel quality threshold.

12. The relay state management method according to claim 11, wherein a descending order of priority comprises:
a first channel quality threshold and/or a second channel quality threshold received by the first terminal from the network device;
a first channel quality threshold and/or a second channel quality threshold received by the first terminal from the relay terminal; and
a pre-configured first channel quality threshold and/or a pre-configured second channel quality threshold.

13. The relay state management method according to claim 1, wherein the performing, by the first terminal, the activation and/or deactivation of the relay function based on the first indication information comprises:
in case that the first indication information indicates that the relay function is to be activated, determining, by the first terminal, that the activation of the relay function is allowed and performing, by the first terminal, the activation of the relay function; and/or
in case that the first indication information indicates that the relay function is to be deactivated, determining, by the first terminal, that the deactivation of the relay function is allowed and performing, by the first terminal, the deactivation of the relay function.

14. The relay state management method according to claim 1 or 13, wherein in case that the first terminal performs the activation and/or deactivation of the relay function based on the first indication information, the method further comprises:
receiving, by the first terminal, the first indication information transmitted by the network device or the relay terminal,
wherein a radio resource control (RRC) connection exists between the first terminal and the network device, or an end-to-end RRC connection exists between the first terminal and the network device through the relay terminal.

15. The relay state management method according to claim 14, wherein the first indication information is carried by RRC signaling or a media access control control element (MAC CE).

16. The relay state management method according to claim 4 or 5 or 6 or 13, further comprising:
transmitting, by the first terminal, second indication information to a second terminal, the second indication information being used for triggering the second terminal to perform relay re-selection and/or routing update,
wherein the second terminal comprises a remote terminal and/or a relay terminal connected to the first terminal.

17. The relay state management method according to claim 4 or 5 or 6 or 13, further comprising:
transmitting, by the first terminal, third indication information to a preceding-hop relay terminal and/or the network device, the third indication information being used for triggering the preceding-hop relay terminal and/or the network device to perform routing update.

18. The relay state management method according to claim 16, wherein the transmitting, by the first terminal, the second indication information to the second terminal comprises:
transmitting, by the first terminal, the second indication information to the second terminal through dedicated signaling over the sidelink interface; or
transmitting, by the first terminal, the second indication information to the second terminal through a broadcast message over the sidelink interface.

19. The relay state management method according to claim 17, wherein the transmitting, by the first terminal, the third indication information to the preceding-hop relay terminal comprises:
transmitting, by the first terminal, the third indication information to the preceding-hop relay terminal through dedicated signaling over the sidelink interface; or
transmitting, by the first terminal, the third indication information to the preceding-hop relay terminal through a broadcast message over the sidelink interface.

20. A relay state management apparatus, comprising:
a processing unit, configured to perform activation and/or deactivation of a relay function of a first terminal based on a first channel quality or first indication information,
wherein the first terminal is a terminal having the relay function, the first channel quality is a channel quality of a sidelink interface between the first terminal and a relay terminal, and the first indication information is transmitted to the first terminal by a network device or the relay terminal.

21. A terminal, the terminal being a first terminal, and comprising a memory, a transceiver, and a processor,
wherein the memory is configured to store a computer program; the transceiver is configured to transmit and receive data under the control of the processor; and the processor is configured to read the computer program in the memory and perform following step:
performing activation and/or deactivation of a relay function of the first terminal based on a first channel quality or first indication information,
wherein the first terminal is a terminal having the relay function, the first channel quality is a channel quality of a sidelink interface between the first terminal and a relay terminal, and the first indication information is transmitted to the first terminal by a network device or the relay terminal.

22. The terminal according to claim 21, wherein the processor is further configured to read the computer program in the memory and perform following steps:
obtaining a first channel quality threshold and/or a second channel quality threshold, the second channel quality threshold being higher than the first channel quality threshold; and
performing a determination as to activation and/or deactivation of the relay function based on the first channel quality and the obtained first channel quality threshold and/or second channel quality threshold.

23. The terminal according to claim 22, wherein the processor is further configured to read the computer program in the memory and perform following step:
obtaining the first channel quality threshold and/or the second channel quality threshold in a first manner, wherein the first manner comprises at least one of:
the first channel quality threshold and/or the second channel quality threshold is pre-configured;
the first channel quality threshold and/or the second channel quality threshold is transmitted by the network device; or
the first channel quality threshold and/or the second channel quality threshold is transmitted by the relay terminal.

24. The terminal according to claim 22, wherein the processor is further configured to read the computer program in the memory and perform at least one of following steps:
determining that the activation of the relay function is allowed in case that the first channel quality is greater than or equal to the first channel quality threshold;
determining that the deactivation of the relay function is allowed in case that the first channel quality is less than or equal to the first channel quality threshold;
determining that the activation of the relay function is allowed in case that the first channel quality is less than or equal to the second channel quality threshold;
determining that the deactivation of the relay function is allowed in case that the first channel quality is greater than or equal to the second channel quality threshold;
determining that the activation of the relay function is allowed in case that the first channel quality is less than or equal to the second channel quality threshold and greater than or equal to the first channel quality threshold; and/or
determining that the deactivation of the relay function is allowed in case that the first channel quality is greater than or equal to the second channel quality threshold or less than or equal to the first channel quality threshold.

25. The terminal according to claim 23, wherein in case that the first manner comprises that the first channel quality threshold and/or the second channel quality threshold is transmitted by the network device, the processor is further configured to read the computer program in the memory and perform following steps:
obtaining the first channel quality threshold and/or the second channel quality threshold through a first broadcast message transmitted by the network device; and/or
obtaining the first channel quality threshold and/or the second channel quality threshold through dedicated signaling transmitted by the network device.

26. The terminal according to claim 23, wherein in case that the first manner comprises that the first channel quality threshold and/or the second channel quality threshold is transmitted by the relay terminal, the processor is further configured to read the computer program in the memory and perform following step:
obtaining the first channel quality threshold and/or the second channel quality threshold through a second broadcast message transmitted by the relay terminal over the sidelink interface.

27. The terminal according to claim 26, wherein the second broadcast message comprises at least one of:
a relay discovery message;
a broadcast message obtained, by the relay terminal, from the network device and forwarded by the relay terminal over the sidelink interface; or
a broadcast message of the network device obtained, by the relay terminal, from another relay terminal and forwarded by the relay terminal over the sidelink interface.

28. The terminal according to claim 22 or 23, wherein the processor is further configured to read the computer program in the memory and perform following step:
in case that the first terminal obtains a plurality of first channel quality thresholds and/or a plurality of second channel quality thresholds, determining the first channel quality threshold and/or the second channel quality threshold in a second manner, wherein the second manner comprises at least one of:
selecting any one of the plurality of first channel quality thresholds as the first channel quality threshold;
selecting any one of the plurality of second channel quality thresholds as the second channel quality threshold;
selecting a first channel quality threshold and/or a second channel quality threshold transmitted by the relay terminal which the first terminal expects to access as the first channel quality threshold and/or the second channel quality threshold;
selecting a lowest channel quality threshold among the plurality of second channel quality thresholds as the second channel quality threshold;
selecting a highest channel quality threshold among the plurality of second channel quality thresholds as the second channel quality threshold;
selecting a lowest channel quality threshold among the plurality of first channel quality thresholds as the first channel quality threshold;
selecting a highest channel quality threshold among the plurality of first channel quality thresholds as the first channel quality threshold; or
selecting a first channel quality threshold and/or a second channel quality threshold with a highest priority in accordance with an order of priority as the first channel quality threshold and/or the second channel quality threshold.

29. The terminal according to claim 28, wherein a descending order of priority comprises:
a first channel quality threshold and/or a second channel quality threshold received by the first terminal from the network device;
a first channel quality threshold and/or a second channel quality threshold received by the first terminal from the relay terminal; and
a pre-configured first channel quality threshold and/or a pre-configured second channel quality threshold.

30. The terminal according to claim 21, wherein the processor is further configured to read the computer program in the memory and perform following steps:
in case that the first indication information indicates that the relay function is to be activated, determining that the activation of the relay function is allowed and performing the activation of the relay function; and/or
in case that the first indication information indicates that the relay function is to be deactivated, determining that the deactivation of the relay function is allowed and performing the deactivation of the relay function.

31. The terminal according to claim 21 or 30, wherein the processor is further configured to read the computer program in the memory and perform following step:
receiving the first indication information transmitted by the network device or the relay terminal,
wherein an RRC connection exists between the first terminal and the network device, or an end-to-end RRC connection exists between the first terminal and the network device through the relay terminal.

32. The terminal according to claim 31, wherein the first indication information is carried by RRC signaling or an MAC CE.

33. The terminal according to claim 24 or 30, wherein the processor is further configured to read the computer program in the memory and perform following step:
transmitting second indication information to a second terminal, the second indication information being used for triggering the second terminal to perform relay re-selection and/or routing update,
wherein the second terminal comprises a remote terminal and/or a relay terminal connected to the first terminal.

34. The terminal according to claim 24 or 30, wherein the processor is further configured to read the computer program in the memory and perform following step:
transmitting third indication information to a preceding-hop relay terminal and/or the network device, the third indication information being used for triggering the preceding-hop relay terminal and/or the network device to perform routing update.

35. The terminal according to claim 33, wherein the processor is further configured to read the computer program in the memory and perform following step:
transmitting the second indication information to the second terminal through dedicated signaling over the sidelink interface; or
transmitting the second indication information to the second terminal through a broadcast message over the sidelink interface.

36. The terminal according to claim 34, wherein the processor is further configured to read the computer program in the memory and perform following step:
transmitting the third indication information to the preceding-hop relay terminal through dedicated signaling over the sidelink interface; or
transmitting the third indication information to the preceding-hop relay terminal through a broadcast message over the sidelink interface.

37. A processor-readable storage medium storing a computer program, wherein the computer program is configured to cause a processor to perform the relay state management method according to any one of claims 1 to 19.
